# EUROPEAN PATENT APPLICATION

(11) **EP 1 069 753 A2**
(43) Date of publication of application: **17.01.2001**
(21) Application number: 00115229.7
(22) Date of filing: 13.07.2000
(51) Int. Cl.: H04M 19/04, H04M 1/725

(54) **Communication terminal**

(30) Priority: 14.07.1999 JP 19997699
(71) Applicant: ROHM CO., LTD., Kyoto-shi Kyoto 615-0045 (JP)
(72) Inventor: Kinugasa, Yasushi, c/0 Rohm Co., Ltd., Kyoto-Shi, Kyoto 615-0045 (JP)
(74) Representative: Glawe, Delfs, Moll & Partner

(57) **Abstract**

The information about a composed incoming call alert melody is stored in memory. With a user who is to transmit the incoming call alert melody and another user who is to receive the incoming call alert melody both in a communicating state, when an incoming call alert melody transmission switch is pressed, a communication terminal enters an incoming call alert melody transmission mode. In the incoming call alert melody transmission mode, the incoming call alert melody data stored in the memory is transmitted to the other user in a predetermined procedure when transmission of the incoming call alert melody data is specified. When the reception is specified, the incoming call alert melody data received from the other user in a predetermined procedure is written to the memory.

## Description

### BACKGROUND OF THE INVENTION

### Field of the Invention

The present invention relates to a communication terminal such as a portable phone unit, a PHS (Personal Handy Phone System) unit, a cable phone unit, etc.

### Description of the Prior Art

In some communication terminals incoming call is informed by an alert melody. In such a communication terminal, incoming call alert melody data are stored in a memory, and the incoming call is informed by reproducing voice from the incoming call alert melody data. When an incoming call alert melody is composed by an individual, the composing function of the communication terminal is utilized. When any melody is composed by using the composing function, the communication terminal stores the melody as incoming call alert melody data in the memory.

For example, in a portable phone, an incoming call alert melody is formed by switching an operation mode into a composing mode, and specifying the pitch of notes, for example, do, re, mi, etc., and the length of the notes, for example, a quarter note, an eighth note, etc. by using dial keys. To reproduce melody data by using the tone generating function, the portable phone generates incoming call alert melody data by converting the melody data specified by using dial keys into a digital signal, and stores the data in the memory. When the portable phone receives a control signal from a base station requesting to start communication, the incoming call alert melody data stored in the memory is read to announce the receipt of a call through a speaker.

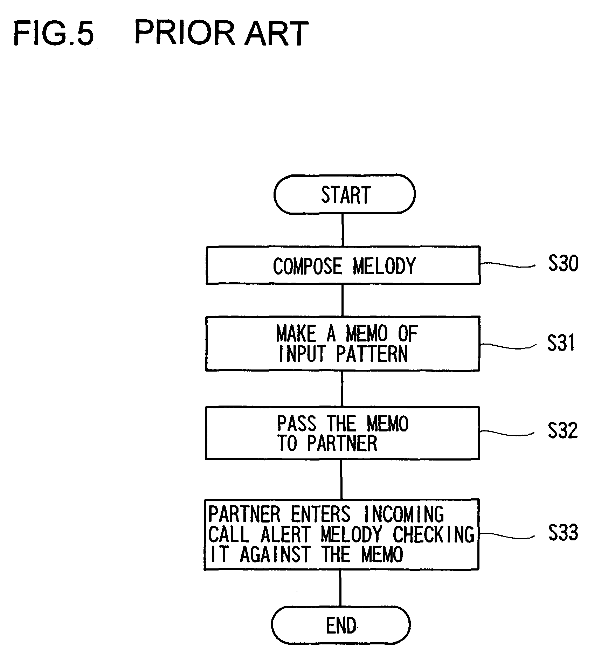

Next, the method of transmitting the information representing an incoming call alert melody generated by the individual using a conventional communication terminal will be described below by referring to FIG. 5. First, in step S30, a melody is composed by using the composing function of the communication terminal. Then, in step S31, a memorandum is written down describing how dial keys, etc. have been operated to form an incoming call alert melody. Then, the memorandum is passed to a person to whom the information representing the incoming call alert melody is to be transmitted in step S32. In step S33, the person who receives the memorandum reads the memorandum, operates the dial keys, etc. using the composing function of the communication terminal, and forms an incoming call alert melody.

Thus, the above mentioned conventional communication terminal can transmit the information representing the incoming call alert melody generated by a person only by transmitting a memorandum showing the input pattern. Therefore, it is very troublesome to transmit the information representing the incoming call alert melody, and it has been difficult to transmit an excellent incoming call alert melody to another person.

### SUMMARY OF THE INVENTION

An object of the present invention is to provide a communication terminal capable of easily transmitting the information representing an incoming call alert melody composed by an individual.

The communication terminal according to the present invention includes communication means, a memory for storing incoming call alert melody data, and means for informing a call by an alert melody based on the incoming call alert melody data, and has the function of communicating the incoming call alert melody data with a correspondent through the communication means.

With such a configuration, the communication terminal can transmit the incoming call alert melody data stored in the memory to the correspondent through the communication means. Therefore, incoming call alert melody data composed by the individual can be easily transmitted.

### DESCRIPTION OF THE DRAWINGS

FIG. 1 is a block diagram of a circuit of a portable phone according to an embodiment of the present invention;
FIG. 2 shows a memory map of a memory of the portable phone;
FIG. 3 shows a protocol used by the portable phone when transmitting incoming call alert melody data;
FIG. 4 is a flowchart showing a method of transmitting an information representing an incoming call alert melody composed by an individual using the portable phone; and
FIG. 5 is a flowchart showing a method of transmitting an information representing an incoming call alert melody composed by the individual using a conventional communication terminal.

### DESCRIPTION OF THE PREFERRED EMBODIMENTS

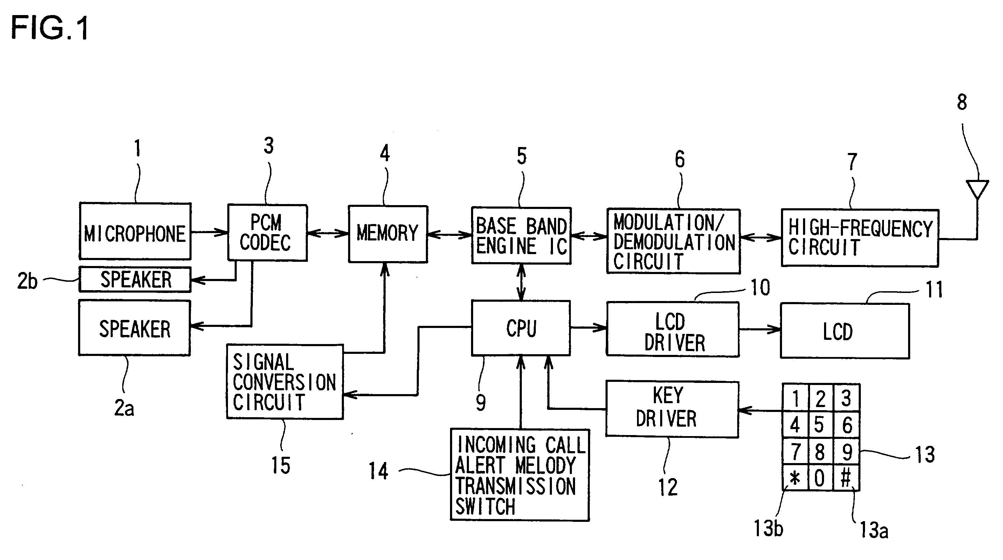

An embodiment of the present invention will be described below by referring to the attached drawings. FIG. 1 is a block diagram of a portable phone according to an embodiment of the present invention. In FIG. 1, reference numeral 1 denotes a microphone for inputting voice. Reference numeral 2a denotes a speaker for reproducing communicated voice. Reference numeral 2b denotes a speaker for reproducing an incoming call alert melody. The speaker 2a may be omitted, with the speaker 2b used also for reproducing communicated voice. Reference numeral 3 denotes a PCMCODEC (Pulse Code Modulation Coder/Decoder) for converting an analog voice signal input from the microphone 1 into a digital signal, and for converting a digital signal caught by an antenna 8, then duly processed, and then fed from a memory 4 into an analog signal and then outputting the analog signal to a speaker 2. Reference numeral 4 denotes a memory.

Reference numeral 5 denotes a base band engine IC (Integrated Circuit) for processing data stored in the memory 4 such that the data conform to the data format used by the modulation system used in a portable phone such as a PDC (Personal Digital Cellular) system, a CDMA (Code Division Multiple Access) system, a W-CDMA (Wideband Code Division Multiple Access) system, a GSM (Global System for Mobile Communication) system, etc. The IC 5 also retrieves a voice signal from the data in the data format of the modulation system used, and writes the signal to the memory 4. The base band engine IC 5 can also be referred to as a protocol IC.

Reference numeral 6 denotes a modulation/demodulation circuit for digitally modulating a signal processed by the base band engine IC 5 to generate an intermediate frequency signal, and, reversely, for digitally demodulating an input intermediate frequency signal. Reference numeral 7 denotes a high-frequency circuit for converting an intermediate frequency signal into a high-frequency signal which can be transmitted over the air, and converting a received high-frequency signal into an intermediate frequency signal. The high-frequency circuit 7 includes a mixer for converting a frequency.

Reference numeral 8 denotes an antenna for establishing radio-communication using a high-frequency signal. Reference numeral 9 denotes a CPU (Central Processing Unit) for controlling the entire system of the portable phone. Reference numeral 11 denotes an LCD (Liquid Crystal Display) for displaying various information, and is driven by an LCD driver 10 which receives a signal from the CPU 9.

Reference numeral 13 represents dial keys, consisting of numeric buttons "0" through "9," and buttons "*" and "#." A button pressed among the dial keys 13 is detected by a key driver 12, and an output of the driver is transmitted to the CPU 9. Reference numeral 14 denotes an incoming call alert melody transmission switch for switching an operation of the portable phone into an incoming call alert melody transmission mode. Reference numeral 15 denotes a signal conversion circuit for converting key input information into a digital signal.

Described below is the operation performed when normal communication is established using a portable phone. When voice is transmitted, the microphone 1 converts voice into an analog signal. The analog signal is converted by the PCMCODEC 3 into a digital signal, and stored in the memory 4. The digital signal stored in the memory 4 is processed by the base band engine IC 5 such that it conforms to the data format used by the communication system used in the portable phone.

The digital signal processed by the base band engine IC 5 into the data format is digitally modulated by the modulation/demodulation circuit 6 to be converted into an intermediate frequency signal. The intermediate frequency signal is converted by the high-frequency circuit 7 into a high frequency signal, and is transmitted over the air through the antenna 8.

On the other hand, a high-frequency signal received by the antenna 8 is converted by the high-frequency circuit 7 into an intermediate frequency signal, and demodulated by the modulation/demodulation circuit 6. Then, the base band engine IC 5 extracts voice data, and stores It in the memory 4. The control signal contained in a received signal is fed from the base band engine IC 5 to the CPU 9. A voice signal stored in the memory 4 is converted by the PCMCODEC 3 into an analog signal, and is reproduced by the speaker 2a.

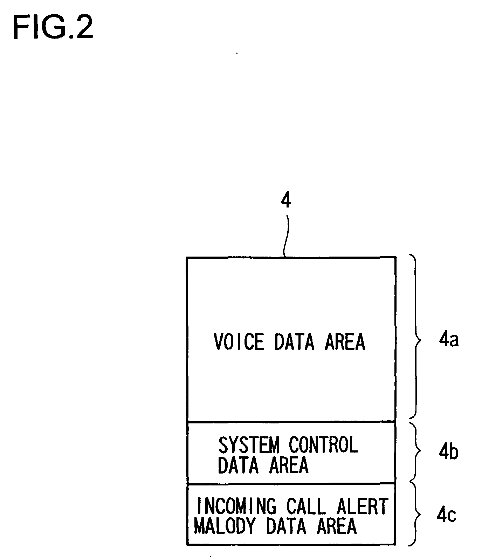

FIG. 2 shows a memory map of the memory 4. In FIG. 2, reference numeral 4a denotes an area for storing voice data, and occupies a greater part of the memory 4. Reference numeral 4b denotes a system control data area for storing the volume level of the speaker 2, the display color of the LCD 11 such as red, green, and the like, the initial values of such settings, the telephone number of the phone unit itself, and the like. Reference numeral 4c denotes an incoming call alert melody data area for storing the information representing an incoming call alert melody.

When a user composes an incoming call alert melody, the operation of the portable phone can be switched into a composing mode by sequentially pressing the buttons of the dial keys 13 in a predetermined order. Since a pitch or a length of a note is assigned to every button of the dial keys 13 in the composing mode, an incoming call alert melody is composed by pressing a button according to a melody. The CPU 9 converts the key input information into a digital signal using the signal conversion circuit 15 for converting the key input information into a digital signal in accordance with the generated melody, and stores the digital signal in the incoming call alert melody data area 4c of the memory 4. The signal conversion circuit 15 is a circuit such as a truth table that assigns different key numbers to different digital signals one to one. The CPU 9 can perform a similar process using software.

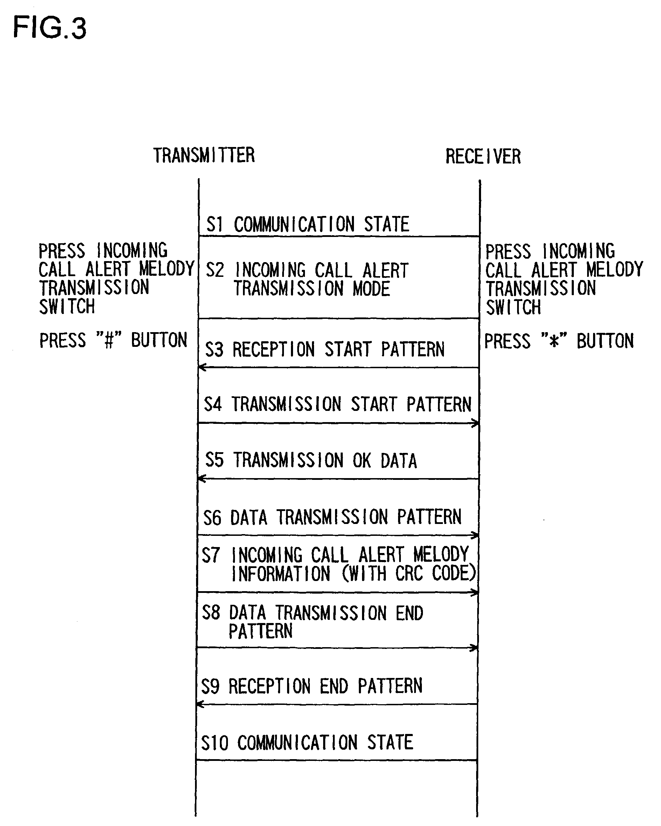

FIG. 3 shows a protocol used in communicating the incoming call alert melody signal stored in the incoming call alert melody data area 4c with a correspondent. In step S1, one of a transmitter and a receiver calls the other, and the transmitter is connected to the receiver, thereby entering a communicating state. Then, in step S2, the transmitter and the receiver both press the incoming call alert melody transmission switch 14, and enter the incoming call alert melody transmission mode.

Thus, the CPU 9 awaits input of a transmission instruction or a reception instruction based on a push tone while remaining in the communication state with the correspondent. In the transmitter, the "#" button 13a indicating transmission is pushed. The CPU 9 for which the button 13a has been pushed awaits a reception start pattern which is a pattern tone announcing the start of reception from the receiver.

Any communication control pattern such as the above mentioned reception start pattern is communicated as voice in the incoming call alert melody transmission mode. When the transmitter receives a reception start pattern from the receiver, the base band engine IC 5 of the transmitter writes the voice data of the reception start pattern to the memory 4.

The CPU 9 determines whether or not the received voice data is the reception start pattern by comparing the reception start pattern with a pattern having been stored in the memory 4 by the signal conversion circuit 15. The signal conversion circuit 15 converts signals generated by operation of the keys 13 into tones and stores them in the memory 4.

In the receiver, the "*" button 13b indicating reception is pushed. The CPU 9 for which the button 13b has been pushed transmits a reception start pattern to the transmitter in step S3. When the transmitter receives the reception start pattern in the above mentioned method, the CPU 9 automatically issues an instruction and transmits a transmission start pattern in step S4. The CPU 9 of the receiver determines whether or not the transmission start pattern has been received from the transmitter in the method similar to the above mentioned method.

The CPU 9 compares the voice data stored in and received from the memory 4 with the transmission start pattern stored in the memory 4. If they match each other, it is determined that the transmission start pattern has been received. Other control patterns are determined similarly.

When the receiver receives the transmission start pattern, it transmits a transmission OK data to the transmitter in step S5, and awaits incoming call alert melody data. As a reception start pattern, a transmission start pattern, and a transmission OK data, the tone of their respective pattern may be transmitted either once or a plurality of times. It is preferable that these control patterns be such as are not included in voice data so that a control pattern cannot be confused with voice data.

When the transmitter receives a transmission OK data, it transmits a data transmission pattern in step S6, transmits the information about an incoming call alert melody with a CRC (Cyclic Redundancy Check) code for error detection in step S7, and finally transmits a data transmission end pattern in step S8.

A data transmission pattern refers to, for example, a tone of which the voice data retrieved by the base band engine IC 5 have "1"s in continuous 100 bits, and then a "0" in the 101st bit. When the receiver is receiving the "1"s of a data transmission pattern, it does not write data to the incoming call alert melody data area 4c, and starts writing data after receiving the "0" to the incoming call alert melody data area 4c. Thus, the receiver checks the timing of writing data to the incoming call alert melody data area 4c according to the data transmission pattern. A data transmission end pattern can also be a tone having "1"s in continuous 100 bits.

Since the incoming call alert melody data stored in the incoming call alert melody data area 4c is a digital signal having the same format as the voice data stored in the area 4a for storing voice data, the transmitter uses the base band engine IC 5 to process incoming call alert melody data stored in the incoming call alert melody data area 4c, uses the modulation/demodulation circuit 6 to modulate the data, and uses the high-frequency circuit 7 to convert the data into a high-frequency signal, thereby transmitting the data over the air.

On the other hand, the receiver uses the high-frequency circuit 7 to convert a received signal into an intermediate frequency signal, uses the modulation/demodulation circuit 6 to demodulate the signal, and uses the base band engine IC 5 to retrieve voice data, thereby successfully writing the incoming call alert melody data to the incoming call alert melody data area 4c. Thus, the portable phone can establish communication of incoming call alert melody data in substantially the same procedure as the procedure for the voice communication. Accordingly, the contents of the data stored in the incoming call alert melody data area 4c of the receiver are the same as the contents of the incoming call alert melody data stored in the incoming call alert melody data area 4c of the transmitter.

The receiver checks whether or not there is a data error in the information about received incoming call alert melody using a CRC code. If there are no errors, then the reception end pattern is transmitted in step S9 after the data transmission end pattern is received, the incoming call alert melody transmission mode is terminated, and control is returned to the normal communication state. When the transmitter receives a reception end pattern, the incoming call alert melody transmission mode is terminated, and control is returned to the normal communication mode.

On the other hand, if there are data errors in the incoming call alert melody received by the receiver, then the receiver transmits a re-transmission request pattern instead of the reception end pattern in step S9 after the data transmission end pattern is received, and maintains the incoming call alert melody transmission mode. When the receiver receives the retransmission request pattern, the transmitter transmits a transmission start pattern after returning control to step S4, and re-transmits the incoming call alert melody data.

If a portable phone receives a control signal which requests communication from a base station when it is not in the communication state, then the CPU 9 is notified that the control signal is received from the base band engine IC 5. Therefore, the CPU 9 instructs to transmit the incoming call alert melody data stored in the incoming call alert melody data area 4c of the memory 4 to the PCMCODEC 3 through the base band engine IC 5. The incoming call alert melody data is converted into an analog signal by the PCMCODEC 3, and reproduced by the speaker 2. Thus, the melody announces the reception of a call.

Afterwards, the CPU 9 instructs to notify the base station that the control signal has been received, communication is established by some control signals communicated between the portable phone and the base station, and voice data is transmitted from the base station to the portable phone.

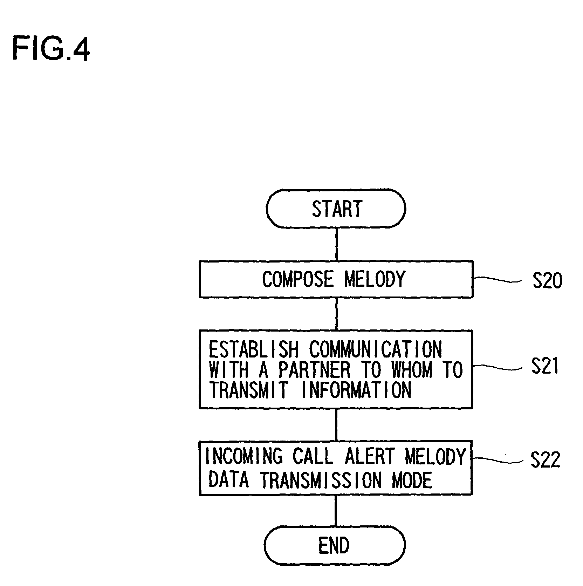

In summary, when a user tries to transmit incoming call alert melody data using the portable phone according to the present embodiment, the user composes an incoming call alert melody using the composing function in step S20 as shown in FIG. 4. Then, in step S21, the user enters the communication state with a correspondent to whom information is to be transmitted. In step S22, the user presses the incoming call alert melody transmission switch 14 to enter the incoming call alert melody transmission mode, thereby transmitting the information about the incoming call alert melody to the correspondent. As a result, the information about an incoming call alert melody can be easily transmitted.

Even without a dedicated incoming call alert melody transmission switch 14 for switching the operation of the portable phone into an incoming call alert melody transmission mode, a specific button such as the button "1" among the dial keys 13 can be pressed for several seconds in the communication state to make the CPU 9 switch the operation into the incoming call alert melody transmission mode on a software basis. As a result, the incoming call alert melody data can be easily transmitted. Otherwise, for example, the operation of the portable phone can be switched into the incoming call alert melody transmission mode by pressing the buttons in the order of "1," "2," "3," "4," "5," "6," "7," "8," "9," and "#."

In addition, a melody can be composed using a personal computer. In this case, the personal computer is connected to a telephone cable through a modem, and the personal computer functions as a transmitter while a portable phone functions as a receiver, thereby successfully transmitting incoming call alert melody data from the personal computer to the portable phone.

Furthermore, the protocol shown in FIG. 3 can be designed not to use a CRC code when the transmitter transmits incoming call alert melody data in step S7. In this case, the receiver cannot check whether or not there are errors in the received incoming call alert melody data, but the transmitter can return control to the normal communication state by canceling the incoming call alert melody transmission mode immediately after transmitting the data transmission end pattern in step S8, and the receiver can return control to the normal communication state by canceling the incoming call alert melody reception mode immediately after receiving the data transmission end pattern. However, communication using a CRC code added to the incoming call alert melody data as in the embodiment offers higher reliability.

In addition, if the data length is fixed when the transmitter transmits incoming call alert melody data in step S7, the receiver can also determine the end of the received incoming call alert melody data. Therefore, the protocol does not require a data transmission end pattern. For example, since the length of a piece of music is variable, 10 kilobits of information is transmitted from a transmitter to a receiver whenever incoming call alert melody data is transmitted even if, whereas the incoming call alert melody data area 4c has a capacity of 10 kilobits, the actual data is 6 kilobits long.

Furthermore, when the receiver transmits the length of data of the incoming call alert melody data to be transmitted before starting transmitting the incoming call alert melody data, the protocol does not require a data transmission end pattern. In addition, in the incoming call alert melody transmission mode, the "#" button indicates transmission while the "*" button indicates reception. However, other buttons may be used for these purposes.

Additionally, it is possible to transmit incoming call alert melody data to a correspondent through data communication, i.e. non-voice communication, such as conforming to the PIAFS (PHS Internet Access Forum Standard) that permits a PHS unit to communicate on the Internet, but it is more convenient to communicate incoming call alert melody data using the normal voice communication according to the present embodiment, and it is easier to transfer data between models having different melody-data input systems.

In addition, although the present embodiment has been described above about the portable phone, it is not limited to such application; that is, it can be applied to a wireless communication terminal such as a PHS, a transceiver, etc., and a wired communication terminal such as a cable phone.

As described above, according to the present invention, an incoming call alert melody data composed by a user can be easily transmitted. In addition, incoming call alert melody data composed by another person can be stored in the communication terminal without composing an incoming call alert melody by operating a communication terminal while referring to a memo as in the conventional method. This permits easy changing of the incoming call alert melody.

## Claims

1. A communication terminal, comprising:
a memory for storing incoming call alert melody data;
means for reading out the incoming call alert melody data from said memory when a call is received; and
incoming call alert melody data communication means for communicating the incoming call alert melody data with a counterpart communication terminal.

2. A communication terminal according to claim 1,
wherein said incoming call alert melody data communication is established in an incoming call alert melody data communication mode; and
said incoming call alert melody data communication mode is established with a transmitter side and a receiver side in a communicating state.

3. A communication terminal, comprising:
a composing function of composing an incoming call alert melody by operating a key provided in the communication terminal;
a memory for storing information corresponding to said composed incoming call alert melody;
means for reading out a melody data from said memory when a call is received;
a speaker for converting said read melody data into voice; and
means for transmitting the melody data in said memory to another communication device.

4. The communication terminal according to claim 3,
wherein said incoming call alert melody data communication is established in an incoming call alert melody data communication mode; and
said incoming call alert melody data communication mode is established with a transmitter side and a receiver side in a communicating state.

5. A portable phone device, comprising:
a telephone circuit having a microphone, speaker means, memory, a CODEC circuit, a base band engine circuit, a modulation/demodulation circuit, a high-frequency circuit, and dial keys;
a transmission function of converting a voice signal input from the microphone into a digital signal by the CODEC circuit, storing the signal in the memory, reading the signal stored in the memory, converting the signal into a predetermined data format by the base band engine circuit, modulating the signal by the modulation/demodulation circuit, and transmitting the modulated signal through the high-frequency circuit and the antenna;
a reception function of demodulating by the modulation/demodulation circuit a high-frequency signal received through the antenna to extract a signal in a predetermined format, retrieving a voice signal by the base band engine circuit, storing the signal in the memory, reading the signal from the memory, converting the signal into an analog signal by the CODEC circuit, and outputting voice by the speaker means;
a call notification function of reading an incoming call alert melody from the memory when a reception start control signal is received, D/A converting the melody by the CODEC circuit, and outputting voice by the speaker means; and
an incoming call alert melody data transmission function of reading incoming call alert melody data from the memory, and transmitting the data through the base band engine circuit, the modulation/demodulation circuit, the high-frequency circuit, and the antenna.

6. The portable phone device according to claim 5, further comprising an incoming call alert melody data reception function of reading the melody data caught by the antenna into the memory through the high-frequency circuit, the modem circuit, and the base band engine circuit.

7. The portable phone device according to claim 5, further comprising a switch for setting an incoming call alert melody data communication mode.

8. The portable phone device according to claim 7, wherein said incoming call alert melody data communication mode is set in a state in which a transmitter and a receiver enter a communication state.

9. The portable phone device according to claim 5, wherein said speaker means is used both for voice communication and for incoming call alert melody reproduction.

10. The portable phone device according to claim 5, wherein said speaker means has a first speaker for voice communication and a second speaker for incoming call alert melody reproduction.
